# EUROPEAN PATENT SPECIFICATION

(11) **EP 1 228 636 B1**
(45) Date of publication and mention of the grant of the patent: **29.09.2004**
(21) Application number: 99968174.5
(22) Date of filing: 22.12.1999
(51) Int. Cl.: H04N 5/44

(54) **METHOD AND APPARATUS FOR ISOLATING IIC BUS NOISE FROM A TUNER IN A TELEVISION RECEIVER**
VERFAHREN UND VORRICHTUNG ZUR ABSCHIRMUNG EINES TUNERS VON IIC-BUS RAUSCHEN IN EINEM FERNSEHEMPFÄNGER
PROCEDE ET APPAREIL POUR ISOLER UN SYNTONISEUR DU BRUIT DU BUS IIC DANS UN RECEPTEUR DE TELEVISION

(30) Priority: 15.07.1999 US 143845 P
(43) Date of publication of application: 07.08.2002
(73) Proprietor: Thomson Licensing S.A., 92648 Boulogne Cedex (FR)
(72) Inventor: WHITE, David, Glen, Indianapolis, IN 46220-1340 (US); MAYER, Matthew, Thomas, Indianapolis, IN 46250-1145 (US)
(74) Representative: Schäferjohann, Volker Willi, Dipl.-Phys.
(86) International application number: PCT/US1999/030775
(87) International publication number: WO 2001/006767

(56) References cited:
- EP-A- 0 195 163
- EP-A- 0 675 448
- WO-A-99/31598
- PATENT ABSTRACTS OF JAPAN vol. 009, no. 314 (P-412), 10 December 1985 (1985-12-10) & JP 60 144857 A (NIPPON DENKI KK), 31 July 1985 (1985-07-31)

## Description

### BACKGROUND OF THE INVENTION

### Field of Invention

The present invention relates to a television receiver. More particularly, the invention relates to a method of reducing phase noise interference in a phase lock loop circuit of a television receiver.

### Description of the Background Art

A typical high definition television (HDTV) system employs a front end comprising a tuner, a digital IF circuit and a digital demodulation integrated circuit (IC). The system is controlled from the digital decoder board using an inter-integrated circuit bus (I²C). The terminology IIC bus, I2C bus or I²C bus are equivalent, as used herein.

The IIC bus is a two wire, bi-directional bus that permits only two integrated circuits (IC's) to communicate on a bus path at a time. An IC serving in a "master" mode of operation, initiates a data transfer on the bus and generates clock signals that permit the data transfer. An IC serving in a "slave" mode of operation is the IC being operated on or communicated to by the master IC, whereby the slave IC is instructed to either send or receive data. Each IC has its own unique seven bit address, wherein the master IC initiates the communications, and also terminates the communications.

A serial clock line (SCL) propagates clock signals on the IIC bus from a master IC to a slave IC. Each master IC generates its own clock signals when transferring data on the bus. The second bi-directional wire of the IIC bus is a serial data line (SDA) that transfers data using eight bit serial transactions. Typically, a ninth bit is utilized as an acknowledgment bit. When both clock and data lines are held "HIGH", no data can be transferred between two IC's. A HIGH to LOW transition on the SDA line, while the SCL line is HIGH, indicates a start condition for the exchange of data bits. Conversely, a LOW to HIGH transition on the SDA line, while the SCL line is HIGH, defines a stop condition. The master IC generates one clock pulse for each data bit transferred on the SDA line, and the HIGH or LOW state of the data line can only change when the clock signal on the SCL line is in a LOW state.

Multiple IC's share the IIC bus. For example, a microprocessor, in a controller of a television receiver, communicates with numerous IC's within the television receiver via an IIC bus. A problem has been uncovered when down-converting a television signal to a specific intermediate frequency (IF) signal. Coincidental bus traffic by the microprocessor, which functions as a master IC, has been found to cause phase noise interference in a tuner of the receiver. Specifically, a phase-lock loop (PLL) integrated circuit is serially coupled on the IIC bus in the tuner of the television receiver, and acts as a frequency variable tone generator. The microprocessor controls the oscillator frequency of the PLL via the IIC bus. The phase-lock loop is susceptible to the bus traffic when the microprocessor sends commands to other IC's on the bus, so that instead of producing a tone locked at a specific frequency, a range of other frequencies around the desired tone frequency are produced.

For example, in a PLL having a 4 Mhz oscillator, any incidental noise signals generated by the microprocessor may be received by other pins of the PLL integrated circuit connected to the IIC bus. This noise will be added to the resultant signal frequency. In an instance where a user selects a channel at 701 Mhz and the receiver system requires a down-converted IF signal at 44 Mhz, then the PLL must generate a tone locked at a frequency of 745 Mhz. Normally, the 701 Mhz television signal and the 745 Mhz tone signal are mixed to produce an IF signal locked at 44 Mhz. However, additional noise will generate other harmonic frequencies around the tone frequency, causing the IF frequency to fluctuate in a range around 44 Mhz instead.

Thus, the bus chatter is added to the incoming digital video/audio signal and causes a degradation in bit error rate (BER) performance of the television receiver. Ultimately, the bit errors manifest themselves as additional or missing luminance and chrominance pixel components in the video the user is viewing, as well as "clicks and pops" in the audio output. Similarly, when processing an analog television signal, the IIC bus chatter will manifest itself as a distorted picture and/or undesirable wow and/or flutter in the audio output.

Phase noise interference, caused by the IIC bus traffic, may be compensated somewhat by widening the bandwidth of the demodulation IC's carrier trackingloop, to allow it to "track out" the corruption. However, such a method allows additional low frequency noise to combine with the video/audio signal, thereby degrading the bit error rate of the television receiver.

Thus, there is a need to reduce the IIC bus chatter created by the IC traffic on the IIC bus. Furthermore, there is a need to reduce the IIC bus chatter before it influences the phase-lock loop circuitry of the tuner.

From JP60144857 a CPU peripheral circuit arrangement is known that protects memory operations from noise of a peripheral element.

From WO 99/31598 a high speed data bus driver for the IIC bus is known.

### SUMMARY OF INVENTION

The disadvantages heretofore associated with the prior art, are overcome by the present invention of a method and apparatus for isolating a noise intolerant device, e.g., a phase-lock loop of a tuner within a television receiver, from source of noise. In one embodiment, the apparatus isolates a phase-lock loop integrated circuit (IC) from the bus, by providing an isolation buffer that allows the receiver to only pass data to the tuner's phase-lock loop IC when a tune command is issued by a processor.

When not being tuned, the IIC lines to the tuner are held HIGH by a buffer until needed again to perform the tuning function. This allows the demodulation circuitry to use a setting for a carrier tracking-loop that optimizes bit error rate performance.

### BRIEF DESCRIPTION OF THE DRAWINGS

The teachings of the present invention can be readily understood by considering the following detailed description in conjunction with the accompanying drawings, in which:
FIGS. 1 A and 1 B depict a block diagram of a portion of a television receiver comprising a buffer for an IIC bus; and
FIG. 2 depicts a flow diagram of a method for isolating the tuner from the controller assembly in accordance with the present invention.

To facilitate understanding, identical reference numerals have been used, where possible, to designate identical elements that are common to the figures.

### DETAILED DESCRIPTION OF THE INVENTION

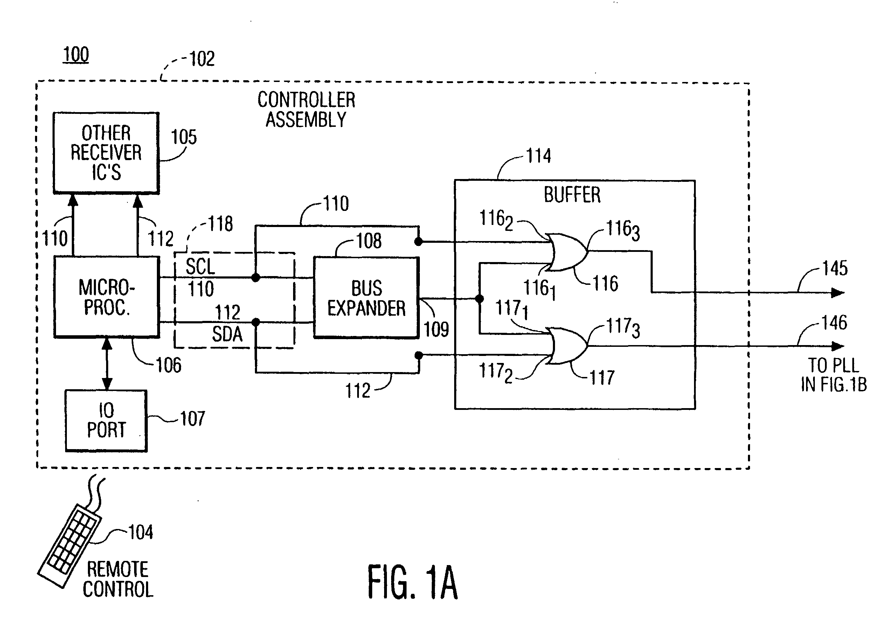

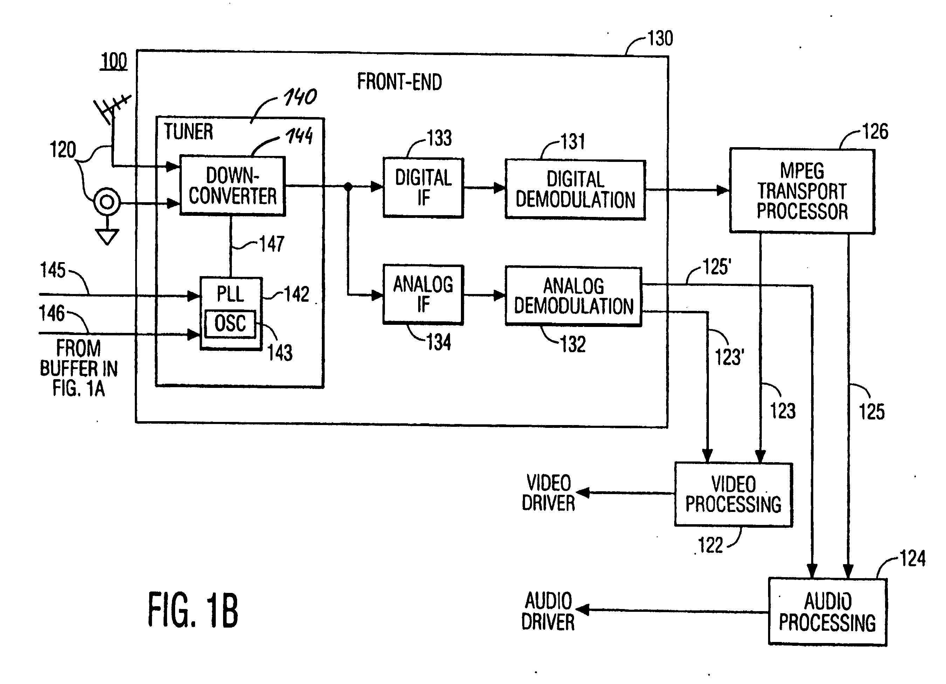

The invention will be primarily described within the context of a television receiver that receives audio and video television signals. However, it will be appreciated by those skilled in the art that the invention is well suited to any system in which digital signals are communicated on an I2C bus. Other signals and systems may illustratively include, but are not limited to, isochronous information transmitted to a television receiver, or digitized data that is transmitted between computers through cable modems on a cable system. FIGS. 1A and 1B together depict a block diagram of a portion of a television receiver (referred to hereinafter as receiver 100) comprising a buffer 114 for an IIC bus 118 in accordance with the present invention.

The receiver 100 comprises a controller assembly 102 (FIG. 1A), for selecting television signals 120 using an input device 104. The controller assembly 102 comprises a processor 106, a bus expander 108, and a buffer 114. A tuner 140 (FIG. 1B) comprises at least one phase-lock loop 142 and at least one down-converter 146, for tuning and down-converting the television signal 120. The tuner 140 is coupled from an output of the buffer 114 to an input of the phase-lock loop 142. The buffer 114 selectively controls data transmission to the tuner 140. The terminology processor and microprocessor are considered interchangeable, for purposes herein.

In this manner, the traffic noise from the microprocessor 106, which is generated when the microprocessor 106 is communicating with other receiver IC's 105 in the system, will be excluded from passing to the phase-lock loop 142. The elimination of noise from the phase-lock loop 142 permits the phase-lock loop 142 to lock at a specific frequency, and then generate a clear tone for mixing with the frequency down-converter 144. Thus, a substantially noise free IF television signal is produced.

Specifically, the receiver 100 comprises a front-end assembly 130 (FIG. 1B) having at least one tuner 140, at least one digital demodulator 131 and at least one analog demodulator 132, a digital IF down-converter 133 and an analog IF down-converter 134 to selectively tune, demodulate or otherwise "receive" at least one of a plurality of television signals 120, having audio and video information transmitted in either analog or digital formats. The analog formats include conventional analog broadcasting systems such as those conforming to the NTSC transmission standards. The digital formats include Digital Broadcast Satellite (DBS), Digital Video Broadcasting (DVB), as well as terrestrial broadcast such as high definition television (HDTV) and cable formats, each conforming, for example, to the ATSC and MPEG transmission standards.

A controller assembly 102 (FIG. 1A) is coupled to the front-end assembly 130 (FIG. 1B) through an input clock line 145 and an input data line 146 of the phase-lock loop 142. The controller assembly 102 allows a user to select and tune the front-end assembly 130 to any one of the television signals 120. The user makes a channel selection through an input device 104, such as a remote control, and the controller assembly 102 sends a channel selection signal through the IIC bus 118 to the front-end assembly 130.

The front-end assembly 130, in response to the channel selection signal provided by the controller 102, operates to tune a selected television signal 120 for reception. In the instance where the selected television signal is a digital television signal, such as a HDTV channel, the digital demodulator 131 of the front-end assembly 130 demodulates the bit stream. The demodulated digital IF signal is then sent for processing at the MPEG transport processor 126. The MPEG transport processor 126 separates the video and audio signal information and sends such video and audio information to a video processor 122 (via signal path 123) and an audio processor 124 (via signal path 125), respectively.

In the instance where an analog television signal is selected, an analog demodulator 132 of the front end assembly 130 demodulates the video and audio information within the selected television signal, and provides the video and audio information to the video processor 122 and the audio processor 124, respectively. Thus, in an analog signal circumstance, it is not necessary to send the demodulated audio/video IF signal to the MPEG transport processor 126. Finally, after either the digital or the analog baseband signal has been recovered, the video processor 122 and the audio processor 124 process the video and audio information, and then send the video and audio information to their output devices, such as a display panel and speaker.

In particular, the controller assembly 102 comprises a microprocessor 106 coupled to a bus expander 108, via the IIC bus 118 serial clock and data signal paths 110 and 112, and a plurality of other receiver IC's 105 also coupled to the IIC bus for other data processing purposes. The microprocessor 106 functions as a master IC on the IIC bus, and controls the IIC bus 118 at all times. As such, all of the remaining IC's coupled to the IIC bus 118 operate in a slave mode of operation. 9

The bus expander IC 109 is coupled to the IIC bus 118 to enable non-IIC compliant IC's to interface with the IIC compliant IC's on the IIC bus 118. The bus expander IC 106 is further coupled to a buffer 114. The buffer 114 comprises a pair of OR gates 116 and 117. However, a person skilled in the art for which the invention pertains will recognize that other buffering devices, such as discrete transistor circuits, may also be utilized.

An output control port 109 of the bus expander 108 is coupled to both the first and second OR gates 116 and 117, through first input ports 116₁ and 117₁ on each OR gate 116 and 117. Additionally, a serial clock line 110 is coupled to a second input port 116₂ on the first OR gate 116. Similarly, a serial data line 112 is coupled to a second input port 117₂ on the second OR gate 117. The pair of OR gates 116 and 117 are then coupled to a tuner 140 in the front-end receiver 130, through their respective output ports 116₃ and 117₃. The output port of the first OR gate 116₃ is coupled to the input clock line 145 of the phase-lock loop 142. Furthermore, the output port of the second OR gate 117₃ is coupled to the input data line 146 of the phase-lock loop 142.

In operation, the microprocessor 106 sends a command signal to the bus expander 108 to set the bus expander's output control port 109 to a logically HIGH state. The bus expander's 108 internal circuitry (not shown) sets the control port 109 HIGH, thereby setting the first input ports 116₁ and 117₁ of the pair of OR gates 116 and 117 to a HIGH state. Therefore, the Boolean logic for an OR gate dictates that no matter what the input signal may be at the second input ports 116₂ and 117₂ of the first and second OR gates 116 and 117, the respective outputs 116₃ and 117₃ of the OR gates 116 and 117 will always be at a logical HIGH state, i.e., bus traffic noise will be precluded for being coupled to the tuner 140.

The tuner 140 of the receiver 100 comprises a phase-lock loop IC (PLL) 142 having an oscillator (e.g., voltage controlled oscillator (VCO)) 143 coupled to a down converter 144 through a signal path 147. In an instance where a user selects an analog channel, the tuner 140 produces the video and audio IF signals sent to the video and audio processors 122 and 124 for processing of the video and audio information. In an instance where a user selects a digital channel, the tuner 140 produces a digital IF signal (e.g., 5.38 Mhz) that gets forwarded to the digital demodulator 131 to separate out the carrier component of the signal and provide the baseband signal. The baseband signal is then forwarded to the MPEG transport processor 126 where the video and audio substreams are separated for processing at the video and audio processors 122 and 124.

The output of the first OR gate 116₃ is coupled to the input clock line 145 of the phase-lock loop IC 142 in the tuner 140. Furthermore, the output of the second OR gate 117₃ is coupled to the input data line 146 of the phase-lock loop IC 142. Thus, the buffer 114 functions to selectively isolate both phase-lock loop inputs 145 and 146 of the phase-lock loop IC 142 from the IIC bus 118 and the microprocessor 106.

In operation, when the bus expander 108 is sent a command signal from the microprocessor 106 to hold the output control port 109 "HIGH", each OR gate 116 and 117 will logically hold their respective outputs 116₃ and 117₃ HIGH. Thus, the input clock line 145 and the input data line 146 of the phase-lock loop IC 142 are logically in a HIGH state. In an instance where both the serial clock and serial data lines on an IIC bus are held in a HIGH state, no data may be transferred between the two devices. Therefore, in this instance, the traffic noise from the microprocessor 106 that exists when the microprocessor 106 is communicating with other receiver IC's 105 in the system, will be excluded from passing through the input clock and data lines 145 and 146 of the phase-lock loop IC 142, and will not affect the generation of tones by the OSC 143.

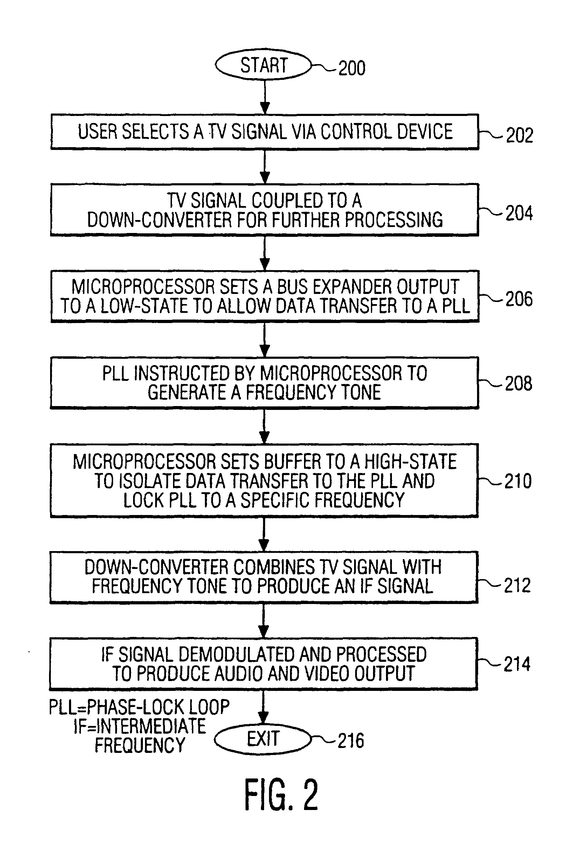

FIG. 2 depicts a flow diagram of a method for isolating the tuner from the bus in accordance with the present invention. The method begins at step 200 and proceeds to step 202, where a user selects a television signal from a control device. At step 204, the television signal is coupled to a down-converter or mixer for further processing.

In step 206, the microprocessor (master) signals the bus expander, via a first IIC command, to set the bus expander output to a LOW state. Henceforth, the phase-lock loop may receive data transmission from the microprocessor, via the SCL and SDA lines. To start data transmission, the microprocessor sets the SDA line of the IIC bus from a steady state HIGH, to a LOW transition, while the SCL is held in a steady state HIGH. Such transition indicates a start condition for the exchange of data bits. The HIGH or LOW state of the data line (SDA) may only change when the clock signal on the SCL line is LOW. At the next clock pulse from the microprocessor, the serial clock line is set LOW, causing the output clock line of the buffer (i.e., first OR gate of FIG.1) coupled to the clock input of the phase-lock loop, to a LOW state.

At each subsequent LOW clock pulse, data may be transmitted over the SDA line, thereby permitting the phase-lock loop IC to receive data transmissions over the IIC bus from the microprocessor. The data transmissions contain information necessary for the phase-lock loop to generate a tone, which facilitates demodulation of a television signal located at a particular channel. As long as the microprocessor sends a repeated START signal, prior to transmitting each byte, the IIC bus remains in a "busy" state. When the microprocessor has completed the data transmission, the microprocessor generates a LOW to HIGH transition on the SDA line, while the SCL is HIGH, to define a stop condition.

In step 208, once the phase-lock loop receives the information necessary to generate the tone, the phase-lock loop locks at a specific frequency designated by the microprocessor. The method proceeds to step 210, where the microprocessor, via a second IIC command from the microprocessor, causes the output on the bus expander to go into a HIGH state. The HIGH state from the output of the bus expander, thereby causes the buffer to also go into a HIGH state, in a similar manner as described above. At this point, the phase-lock loop is appropriately locked at a specific frequency, and the phase-lock loop is isolated from any further communications (noise) from the microprocessor's activities with other IC's on the IIC bus.

In step 212, the television signal and the locked frequency tone are combined in the down-converter, and an IF signal is produced. Thus, when the tone is mixed with the television signal in the down-converter, a IF signal is produced without any fluctuations in frequency due to microprocessor generated bus noise. In step 214, the IF signal is demodulated (then sent to an MPEG processor to produce video and audio substreams in the instance where the signal is a digital IF signal), and processed to produce the desired audio and video output. At step 216, the method ends, until a user requests a different television channel whereupon the inventive method is repeated.

It should be apparent to those skilled in the art that a novel method and apparatus for excluding noise from an input of a terrestrial television signal tuner has been provided. The buffer device inventively functions to isolate the phase-lock loop IC from noise occurring on the IIC bus. Although various embodiments that incorporate the teachings of the present invention have been shown and described in detail herein, those skilled in the art can readily devise many other varied embodiments that still incorporate these teachings.

## Claims

1. Apparatus for isolating a noise intolerant device (140) from a source of noise, comprising:
a processor (106) for producing clock and data signals (SCL,SDA) and a control signal, said processor being a source of noise that may interfere with the operation of the noise intolerant device (140);
a buffer (114); and
a digital bus (118) that couples said clock and data signals to said buffer (114),
where, in response to said control signal (109), said buffer (114) selectively couples said clock and data signals to respective clock and data inputs of said noise intolerant device such that said noise intolerant device (140) is operatively coupled to said processor (106) via said digital bus only when said processor is communicating with said noise intolerant device (140), and decoupled from said processor when said processor (106) is not communicating with said noise intolerant device so that the noise generated by the processor (106) does not affect the operation of the noise intolerant device (140).

2. Apparatus according to claim 1, wherein said digital bus is an inter integrated circuit IIC bus and further comprising an IIC bus expander (108) for transferring said control signal to said buffer (114).

3. Apparatus according to claim 1 or 2, comprising:
an IIC bus having a clock signal path (110) for transferring clock pulses from said processor (108) to said clock inputs of said IIC bus expander (108) and said buffer (114);
a data signal path (112) for transferring data from said processor (106) on said data signal path (112) during each of said clock pulses on said clock signal path (110) to said clock and data inputs of said IIC bus expander (108) and said buffer(114); and
wherein, said output of said IIC bus expander (108), coupled to said buffer(114), selectively controls a clock output and a data output of said buffer (114) for isolating said noise intolerant device (140) from said IIC bus and said processor (106).

4. Apparatus according to claim 3, wherein said noise intolerant device (140) comprises:
a tuner, coupled to said clock and data outputs of said buffer device (114), having a phase-lock loop (142) for generating frequency variable tones, and a down-converter (144) coupled, to said phase-lock loop, for mixing one of a plurality of television signals with a one of said frequency variable tones to produce an IF television signal.

5. Apparatus according to claim 4, wherein said buffer comprises:
a first OR gate (116 )and a second OR gate (117), each of said first and said second OR gates having a first input (116₁,117₁) coupled to said output of said IIC bus expander (108);
a second input (116₂) of said first OR gate (116) coupled to a clock signal path (110) of said IIC bus, and a second input (117₂)of said second OR gate (117) coupled to a data signal path (112) of said IIC bus; and
an output (116₃) of said first OR gate (116), being said clock output of said buffer (114), coupled to said clock input of said phase-lock loop (143), and an output (117₃) of said second OR gate (117), being said data output of said buffer (114), coupled to said data input of said phase-lock loop (143).

6. Television receiver (100) for receiving and processing television signals, comprising an apparatus according to any of claims 1 - 5.

7. Method for isolating a phase-lock loop in a tuner of a television receiver (100) utilizing an apparatus according to claim 4 or 5, comprising the steps of:
sending (208) a first command from a processor (106) to a phase-lock loop (143) to generate a frequency tone; and
sending (210) a second command to a buffer (114) to isolate said phase-lock loop (143) from said processor (106).

8. Method according to claim 7, wherein said first command sending step further comprises the steps of:
setting an inter-integrated circuit IIC bus expander (108) output to a LOW logical state, after receiving a request for a selected television signal from a user, in response to said first command by said processor (106); and
coupling said phase-lock loop (143) to an IIC bus, for enabling said processor (106) to communicate with said phase-lock loop (143) to generate said frequency tone.

9. Method according to claim 8 wherein said coupling step further comprises the step of:
enabling, in response to a bus expander output, a buffer (114) to couple said phase-lock loop (143) to said IIC bus.

10. Method according to claim 8 or 9, wherein said second command sending step further comprises the step of:
setting an output of said buffer (114) to a HIGH logical state after said phase-lock loop (143) locks to said single frequency tone, in response to said second command from said processor (106).

## Patentansprüche

1. Einrichtung zum Entkoppeln einer störempfindlichen Vorrichtung (140) von einer Störquelle, umfassend:
einen Prozessor (106) zum Erzeugen von Takt- und Datensignalen (SCL, SDA) und eines Steuersignals, wobei der Prozessor eine Störquelle ist, die den Betrieb der störempfindlichen Vorrichtung (140) stören kann;
einen Pufferspeicher (114); und
einen digitalen Bus (118), der die Takt- und Datensignale dem Pufferspeicher (114) zuführt,
wobei als Reaktion auf das Steuersignal (109) der Pufferspeicher (114) wahlweise die Takt- und Datensignale entsprechenden Takt- und Dateneingängen der störempfindlichen Vorrichtung so zuführt, so dass die störempfindliche Vorrichtung (140) betrieblich mit dem Prozessor (106) über den digitalen Bus nur verbunden wird, wenn der Prozessor mit der störempfindlichen Vorrichtung (140) kommuniziert, und von dem Prozessor entkoppelt wird, wenn der Prozessor (106) nicht mit der störempfindlichen Vorrichtung kommuniziert, so dass die von dem Prozessor (106) erzeugte Störung die Operation der störempfindlichen Vorrichtung (140) nicht beeinträchtigt.

2. Vorrichtung nach Anspruch 1, bei der der digitale Bus aus einer inter-ingegrierten Schaltung IIC besteht und ferner ein IIC-Bus-Expander (108) umfasst, um das Steuersignal zu dem Puffer (114) zu übertragen.

3. Vorrichtung nach Anspruch 1 oder 2, umfassend:
einen IIC-Bus mit einem Taktsignalweg (110) zum Übertragen von Taktimpulsen von dem Prozessor (108) zu den Takteingängen des IIC-Bus-Expanders (108) und des Puffers (114);
einen Datensignalweg (112) zum Übertragen von Daten von dem Prozessor (106) auf dem Datensignalweg (112) während jedes Taktimpulses auf dem Taktsignalweg (110) zu den Takt- und Dateneingängen des IIC-Bus-Expanders (108) und des Puffers (114); und
wobei der Ausgang des IIC-Bus-Expanders (108), der mit dem Puffer verbunden ist, selektiv einen Taktausgang und einen Datenausgang des Puffers (114) steuert, um das rauschempfindliche Gerät (140) von dem IIC-Bus und dem Prozessor (106) zu isolieren.

4. Vorrichtung nach Anspruch 3, bei der das rauschempfindliche Gerät (140) umfasst:
einen mit den Takt- und Datenausgangen des Puffers (114) verbundenen Tuner, der eine Phasenregelschleife (142) zur Erzeugung von frequenzvariablen Tönen und einen Abwärts-Wandler (144) aufweist, der mit der Phasenregelschleife verbunden ist, um eines einer Mehrzahl von Fernsehsignalen mit einem der frequenzvariablen Töne zu mischen, um ein ZF-Fernsehsignal zu erzeugen.

5. Vorrichtung nach Anspruch 4, bei der der Puffer umfasst:
ein erstes ODER-Gatter (116) und ein zweites ODER-Gatter (117), von denen jedes einen ersten Eingang (116₁, 116₁) aufweist, der mit dem Ausgang des IIC-Bus-Expanders (108) verbunden ist;
einen zweiten Eingang (116₂) des ersten ODER-Gatters (116), der mit einem Taktsignalweg (110) von dem IIC-Bus verbunden ist, und einen zweiten Eingang (116₂) des zweiten ODER-Gatters (117), der mit einem Datensignalweg (112) von dem IIC-Bus verbunden ist; und
einen Ausgang (116₃) des ersten ODER-Gatters (116), der der Taktausgang des Puffers (114) ist und mit dem Takteingang der Phasenregelschleife (143) verbunden ist, und einen Ausgang (117₃) des zweiten ODER-Gatters (117), der der Datenausgang des Puffers (114) ist und mit dem Dateneingang der Phasenregelschleife (143) verbunden ist.

6. Fernsehempfänger (100) zum Empfangen und Verarbeiten von Videosignalen, umfassend eine Vorrichtung nach einem der Ansprüche 1 bis 5.

7. Verfahren zum Isolieren einer Phasenregelschleife in einem Tuner eines Fernsehempfängers (100) unter Verwendung einer Vorrichtung nach Anspruch 4 oder 5, umfassend die Schritte:
Senden (208) eines ersten Befehls von einem Prozessor (106) zu einer Phasenregelschleife (143), um einen Frequenzton zu erzeugen; und
Senden eines zweiten Befehls zu einem Puffer (114), um die Phasenregelschleife (143) von dem Prozessor (106) zu isolieren.

8. Verfahren nach Anspruch 7, bei dem der Schritt zum Senden des ersten Befehls ferner die Schritte umfasst:
Setzen des Ausgangs eines Inter-Integrierte-Schaltungs-IIC-Bus-Expanders (108) auf einen niedrigen logischen Zustand nach Empfang einer Anforderung für ein ausgewähltes Fernsehsignal von einem Benutzer als Reaktion auf den ersten Befehl des Prozessors (106); und
Verbinden der Phasenregelschleife (143) mit einem IIC-Bus, um den Prozessor (106) in die Lage zu versetzen, mit der Phasenregelschleife (143) zu kommunizieren, um den Frequenzton zu erzeugen.

9. Verfahren nach Anspruch 8, bei dem der Verbindungsschritt ferner den Schritt umfasst:
Versetzen eines Puffers (114) in die Lage, die Phasenregelschleife (143) als Reaktion auf einen Bus-Expander-Ausgang mit dem IIC-Bus zu verbinden.

10. Verfahren nach Anspruch 8 oder 9, bei dem der Schritt zum Senden des zweiten Befehls ferner den Schritt umfasst:
Setzen eines Ausgangs des Puffers (114) auf einen hohen logischen Zustand, nachdem die Phasenregelschleife (143) den einzelnen Frequenzton verriegelt, als Reaktion auf den zweiten Befehl von dem Prozessor (106).

## Revendications

1. Appareil pour isoler un dispositif sensible au bruit (140) d'une source de bruit, comprenant :
un processeur (106) pour produire des signaux d'horloge et de données (SCL, SDA) et un signal de commande, ledit processeur étant une source de bruit susceptible de nuire au fonctionnement du dispositif sensible au bruit (140),
un tampon (114), et
un bus numérique (118) qui couple lesdits signaux d'horloge et de données audit tampon (114),
où, en réponse audit signal de commande (109), ledit tampon (114) couple sélectivement lesdits signaux d'horloge et de données aux entrées d'horloge et de données respectives dudit dispositif sensible au bruit, de sorte que ledit dispositif sensible au bruit (140) soit couplé audit processeur (106) via ledit bus numérique uniquement lorsque ledit processeur communique avec ledit dispositif sensible au bruit (140), et découplé dudit processeur lorsque ledit processeur (106) ne communique pas avec ledit dispositif sensible au bruit, de sorte que le bruit généré par le processeur (106) n'affecte pas le fonctionnement du dispositif sensible au bruit (140).

2. Appareil selon la revendication 1, dans lequel ledit bus numérique est un bus IIC de circuit inter-intégré, comprenant un extenseur de bus IIC (108) pour le transfert dudit signal de commande audit tampon (114).

3. Appareil selon la revendication 1 ou 2, comprenant :
un bus IIC avec un chemin de signal d'horloge (110) pour transférer les impulsions d'horloge dudit processeur (106) auxdites entrées d'horloge dudit extenseur de bus IIC (108) et dudit tampon (114) ;
un chemin de signal de données (112) pour le transfert des données dudit processeur (106) sur ledit chemin de signal de données (112) pendant chacune desdites impulsions d'horloge sur ledit chemin de signal d'horloge (110) auxdites entrées d'horloge et de données dudit extenseur de bus IIC (108) et dudit tampon (114) ; et
où ladite sortie dudit extenseur de bus IIC (108), couplé audit tampon (114), commande sélectivement une sortie d'horloge et une sortie de données dudit tampon (114) afin d'isoler ledit dispositif sensible au bruit (140) dudit bus IIC et dudit processeur (106).

4. Appareil selon la revendication 3, dans lequel ledit dispositif sensible au bruit (140) comprend :
un syntoniseur, couplé auxdites sorties d'horloge et de données dudit tampon (114), doté d'une boucle à verrouillage de phase (142) pour générer des tonalités à fréquence variable, et un convertisseur-abaisseur de fréquences (144) couplé à ladite boucle à verrouillage de phase, pour associer l'un d'une pluralité de signaux de télévision à l'une desdites tonalités à fréquence variable en vue de produire un signal de télévision FI.

5. Appareil selon la revendication 4, dans lequel ledit tampon comprend :
un premier élément OU (116) et un second élément OU (117) ; chacun desdits premier et second éléments OU ayant une première entrée (116₁, 117₁) couplée à ladite sortie dudit extenseur de bus IIC (108) ;
une seconde entrée (116₂) dudit premier élément OU (116) couplé à un chemin de signal d'horloge (110) dudit bus IIC et une seconde entrée (117₂) dudit second élément OU (117) couplé à un chemin de signal de données (112) dudit bus IIC ; et
une sortie (116₃) dudit premier élément OU (116), étant nommé sortie d'horloge dudit tampon (114), couplé à ladite entrée d'horloge de ladite boucle à verrouillage de phase (143) et une sortie (117₃) dudit second élément OU (117), étant nommé sortie de données dudit tampon (114), couplé à ladite entrée de données de ladite boucle à verrouillage de phase (143).

6. Récepteur de télévision (100) pour recevoir et traiter des signaux de télévision, comprenant un appareil selon une des revendications 1 à 5.

7. Procédé visant à isoler une boucle à verrouillage de phase dans un syntoniseur d'un récepteur de télévision (100) utilisant un appareil selon la revendication 4 ou 5, comprenant les étapes :
d'envoi (208) d'une première commande à partir d'un processeur (106) à une boucle à verrouillage de phase (143) pour générer une tonalité de fréquence ; et
d'envoi (201) d'une seconde commande à un tampon (114) pour isoler ladite boucle à verrouillage de phase (143) dudit processeur (106).

8. Procédé selon la revendication 7, où ladite première étape d'envoi de commande comprend ensuite les étapes :
de réglage de la sortie d'un extenseur de bus IIC (108) d'un circuit inter-intégré sur un état logique BAS, après la réception d'une requête relative à un signal de télévision sélectionné par l'utilisateur, en réponse à ladite première commande par ledit processeur (106) ; et
de couplage de ladite boucle à verrouillage de phase (143) à un bus IIC, pour permettre audit processeur (106) de communiquer avec ladite boucle à verrouillage de phase (143) en vue de générer ladite tonalité de fréquence.

9. Procédé selon la revendication 8, où ladite étape de couplage comprend également l'étape suivante :
permettre à un tampon (114) de coupler ladite boucle à verrouillage de phase (143) audit bus IIC, en réponse à une sortie d'extenseur de bus.

10. Procédé selon la revendication 8 ou 9, où ladite seconde étape d'envoi de commande comprend également l'étape :
de réglage d'une sortie dudit tampon (114) sur un état logique HAUT une fois que la boucle à verrouillage de phase (143) est bloquée sur ladite tonalité de fréquence unique, en réponse à ladite seconde commande dudit processeur (106).
